# EUROPÄISCHE PATENTSCHRIFT

(11) **EP 2 563 110 B1**
(45) Veröffentlichungstag und Bekanntmachung des Hinweises auf die Patenterteilung: **25.11.2015**
(21) Anmeldenummer: 11718305.3
(22) Anmeldetag: 06.04.2011
(51) Int. Cl.: A01D 75/18, A01F 29/16

(54) **ERNTEMASCHINE MIT EINER EINRICHTUNG ZUM NACHWEIS EINES EINGEDRUNGENEN FREMDKÖRPERS**
HARVESTER WITH FOREIGN OBJECT DETECTION
MOISSONNEUSE PRÉSENTANT UN DISPOSITIF DE DÉTECTION DE LA PRÉSENCE D'UN CORPS ÉTRANGER ENTRÉ DEDANS

(30) Priorität: 29.04.2010 DE 102010028343
(43) Veröffentlichungstag der Anmeldung: 06.03.2013
(73) Patentinhaber: Deere & Company, Moline, IL 61265-8098 (US)
(72) Erfinder: WILLEKE, Karl-Josef, 66503 Dellfeld (DE); KORMANN, Georg, 66482 Zweibrücken (DE)
(74) Vertreter: Holst, Sönke
(86) Internationale Anmeldenummer: PCT/EP2011/055313
(87) Internationale Veröffentlichungsnummer: WO 2011/134765

(56) Entgegenhaltungen:
- EP-A2- 0 702 248
- WO-A1-85/00087
- US-B1- 6 430 903

## Beschreibung

Die Erfindung betrifft eine Erntemaschine nach dem Oberbegriff des Anspruchs 1.

### Stand der Technik

Bei landwirtschaftlichen Erntemaschinen besteht die Gefahr, dass störende Fremdkörper aufgenommen werden. Dies gilt insbesondere, wenn Erntegut direkt vom Boden aufgenommen wird, beispielsweise wenn ein Schwad mittels einer Pickup aufgenommen wird oder ein Schneidwerk bei geringer Schnitthöhe über den Boden geführt wird. Um Schäden an der Erntemaschine zu vermeiden, sind Nachweiseinrichtungen für derartige Fremdkörper bekannt, die ferromagnetische Eigenschaften der Fremdkörper erkennen (vgl. EP 0 702 248 A2), aber für nicht ferromagnetische Fremdkörper unempfindlich sind.

Weiterhin wurden Steindetektoren beschrieben, die von gegen Förderwalzen oder andere Teile der Erntemaschine aufprallenden Fremdkörpern, insbesondere Steine, erzeugte Geräusche erfassen und einen Schnellstopp veranlassen (US 4 353 199 A). Diese Steindetektoren können jedoch kleinere oder weichere Fremdkörper nicht nachweisen.

Die US 6 430 903 B1 beschreibt eine andere Anordnung zur Erkennung von Fremdkörpern, die einen Sender für Wellen (beispielsweise Ultraschall, Mikrowellen oder Röntgenstrahlen) und einen zugehörigen Empfänger umfasst. Die Wellen werden von der Erntemaschine nach vorn abgestrahlt und der Empfänger erfasst ggf. von einem Fremdkörper zurückgeworfene Wellen. Hier ist als nachteilig anzusehen, dass die Wellen eine recht hohe Intensität aufweisen müssen, um die nötige Nachweisempfindlichkeit sicherzustellen, und dass Unbeteiligte durch diese Wellen beeinträchtigt werden können.

Die WO 85/00087 A1 beschreibt eine Einrichtung zur Durchflussmessung in einem Mähdrescher, bei der der Auslassbereich des Körnerelevators von unten her mit Beta-, Gamma- oder Röntgenstrahlen beaufschlagt wird, deren Intensität am oberen Bereich des Elevatorgehäuses durch einen Detektor bestimmt wird.

Schließlich beschreibt die als gattungsgemäß angesehene SU 1 308 242 A1 eine Fremdkörpernachweiseinrichtung für eine Häckselmaschine mit einer Strahlenquelle an einer Seite eines mit Erntegut durchströmten Kanals und einem einzigen Detektor auf der anderen Seite des Kanals. Bei der Strahlenquelle handelt es sich um Americium 242, das Gammastrahlen (d. h. Photonen) mit einer Energie von etwa 60 keV abstrahlt. Falls ein Fremdkörper durch den Kanal gefördert wird, absorbiert er einen Teil der Gamma-Strahlen, sodass die vom Detektor nachgewiesene Intensität vermindert wird und ein Anhalten der Häckselmaschine veranlasst werden kann. Hier ist als nachteilig anzusehen, dass sich eine radioaktive Strahlenquelle an Bord der Häckselmaschine befindet, deren Anbringung und Wartung gesundheitliche Risiken mit sich bringt.

### Aufgabe

Das der Erfindung zu Grunde liegende Problem wird darin gesehen, eine gegenüber dem beschriebenen Stand der Technik verbesserte Einrichtung zum Nachweis von Fremdkörpern in einer Erntemaschine bereitzustellen.

### Lösung

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Eine Erntemaschine umfasst einen von Erntegut durchströmbaren Kanal, an dessen Ober- oder Unterseite eine Photonenquelle in Form einer Röntgenröhre angeordnet ist. An der Unter- oder Oberseite des Kanals ist ein Photonendetektor vorgesehen. Eine Nachweisschaltung ist mit dem Photonendetektor verbunden. Sie dient zum Anhalten eines Einzugsförderers der Erntemaschine im Fall des Nachweises eines Fremdkörpers anhand der vom Photonendetektor empfangenen Intensität und ist zu diesem Zweck mit einer Schnellstoppeinrichtung zum Anhalten des Einzugsförderers der Erntemaschine verbunden.

Der von Erntegut durchströmte Kanal wird von oben oder unten her mit Röntgenstrahlen durchleuchtet, deren Energie vorzugsweise im Bereich zwischen 10 und 200 keV liegt. Die Eindringtiefe (d. h. die Tiefe, in der die Intensität auf 1/e abgeschwächt ist) von Röntgenstrahlen derartiger Energie in Erntegut, das eine Feuchtigkeit von bis zu 80 % haben kann, liegt in der Größenordnung von etwa 0,05 m. Durch die vertikale Orientierung der Strahlen und da die Breite des Förderkanals größer als dessen Höhe ist, erreicht man, dass die Abschwächung der Röntgenstrahlen durch das Erntegut relativ gering und im Wesentlichen unabhängig vom jeweiligen Durchsatz bleibt. Falls nun ein Fremdkörper in den Kanal gelangt, wird die Intensität der vom Photonendetektor nachgewiesenen Strahlung abnehmen und die Nachweisschaltung spricht an und aktiviert die Schnellstoppeinrichtung. Somit werden im Fall eines nachgewiesenen, eingedrungenen Fremdkörpers Schäden an der Erntemaschine durch rechtzeitiges Anhalten des Einzugsförderers vermieden. Auch wird vermieden, dass das von der Erntemaschine abgegebene Erntegut durch den Fremdkörper verunreinigt wird, denn es kann durch Reversieren des Einzugsförderers ausgeworfen werden.

Die vorliegende Erfindung wird an einem Feldhäcksler verwendet, bei dem sich der Kanal zwischen einer Erntegutaufnahmevorrichtung (Erntevorsatz) und einer Häckseleinrichtung befindet und mit unteren Förderwalzen und oberen Förderwalzen ausgestattet ist. Die Photonenquelle und der Photonendetektor (bzw. die Photonendetektoren) befinden sich bezüglich des Erntegutstroms stromauf der Förderwalzen.

Vorzugsweise sind mehrere (d.h. zwei oder mehr) Photonendetektoren über die Breite des Förderkanals verteilt und die Nachweisschaltung ist betreibbar, die von den einzelnen Photonendetektoren empfangenen Intensitäten zu vergleichen. Dadurch lässt sich der Einfluss der (die Strahlung abschwächenden) Erntegutmengen auf die von den Photonendetektoren empfangenen Intensitäten eliminieren oder zumindest vermindern. Falls somit die Intensitäten eines der Detektoren um einen vorbestimmten Prozentsatz, der einen Schwellenwert darstellt, stärker als die Intensitäten des anderen Detektors oder der anderen Detektoren abfallen, kann davon ausgegangen werden, dass ein Fremdkörper aufgenommen wurde und die Nachweisschaltung aktiviert die Schnellstoppeinrichtung.

### Ausführungsbeispiel

In den Zeichnungen ist ein nachfolgend näher beschriebenes Ausführungsbeispiel der Erfindung dargestellt. Es zeigt:
- Fig. 1: eine Erntemaschine mit einer erfindungsgemäßen Einrichtung in Seitenansicht und in schematischer Darstellung,
- Fig. 2: den Kanal der Erntemaschine vor den Einzugswalzen mit der Photonenquelle, mehreren Photonendetektoren und einer Nachweisschaltung in einer schematischen Darstellung.

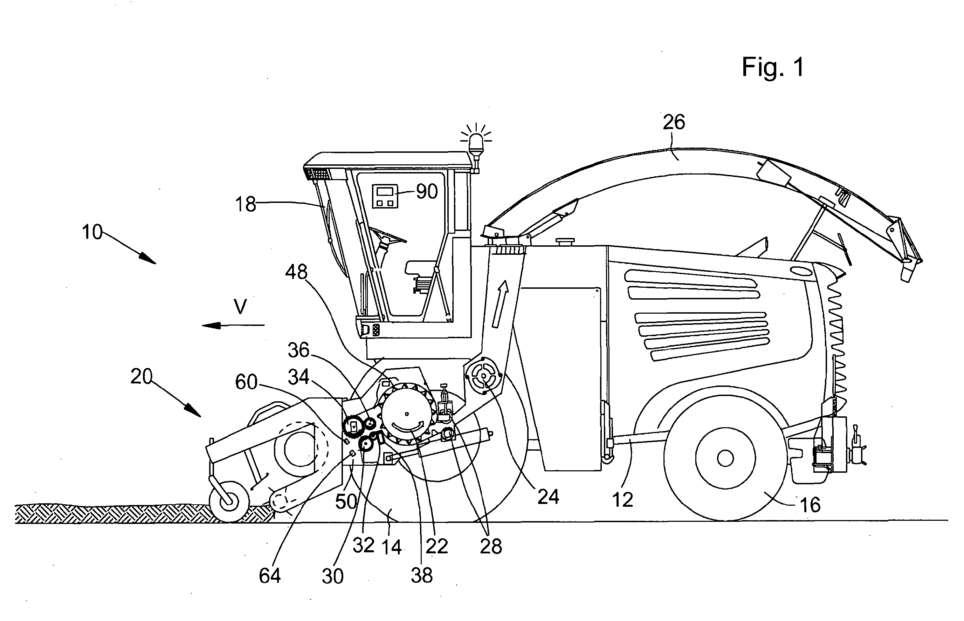

Eine in Figur 1 gezeigte Erntemaschine 10 in der Art eines selbstfahrenden Feldhäckslers baut sich auf einem Rahmen 12 auf, der von vorderen und rückwärtigen Rädern 14 und 16 getragen wird. Die Bedienung der Erntemaschine 10 erfolgt von einer Fahrerkabine 18 aus, von der aus eine Erntegutaufnahmevorrichtung 20 in Form einer Pickup einsehbar ist. Mittels der Erntegutaufnahmevorrichtung 20 vom Boden aufgenommenes Gut, z. B. Gras oder dergleichen, wird einer mit Häckselmessern 48 besetzten Häckseltrommel 22 zugeführt, die es in kleine Stücke häckselt und es einer Fördervorrichtung 24 aufgibt. Das Gut verlässt die Erntemaschine 10 zu einem nebenher fahrenden Anhänger über einen drehbaren Austragsschacht 26. Zwischen der Häckseltrommel 22 und der Fördervorrichtung 24 befindet sich eine Nachzerkleinerungsvorrichtung 28, durch die das zu fördernde Gut der Fördervorrichtung 24 tangential zugeführt wird.

Zwischen der Erntegutaufnahmevorrichtung 20 und der Häckseltrommel 22 wird das Gut durch einen Einzugsförderer mit unteren Förderwalzen 30, 32 und oberen Förderwalzen 34, 36 transportiert, die innerhalb eines Einzugsgehäuses 50 angebracht sind. Die Förderwalzen 30 bis 36 werden auch als Vorpresswalzen bezeichnet, da die oberen Förderwalzen 34, 36 durch Federkraft gegen die unteren Förderwalzen 30, 32 vorgespannt sind, damit das Erntegut zwischen den Förderwalzen 30 bis 36 vorverdichtet wird und besser geschnitten werden kann. Die über den Umfang der Häckseltrommel 22 verteilten Häckselmesser 48 wirken mit einer Gegenschneide 38 zusammen, um das Gut zu häckseln.

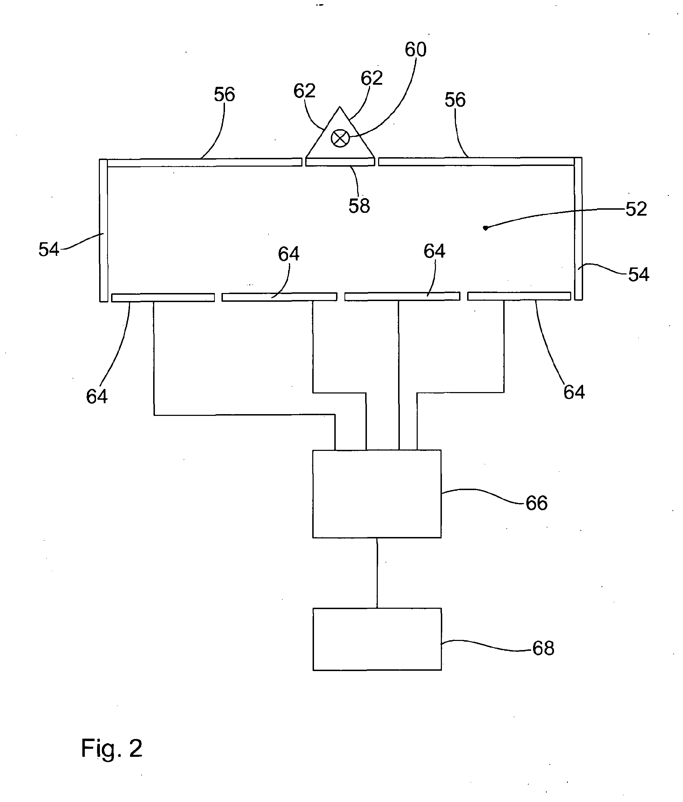

Zwischen einer Abgabestelle der Erntegutaufnahmevorrichtung 20 und den Förderwalzen 30 bis 36 befindet sich ein rechteckiger Kanal 52, der in der Figur 2 in einer von vorn aufgenommenen Querschnittsansicht dargestellt ist. Der Kanal 50 hat Seitenwände 54 und einen oberen Deckel 56, in den mittig ein Fenster 58 eingelassen ist. Oberhalb des Fensters 58 befindet sich eine Photonenquelle 60 in Form einer Röntgenröhre, die nach oben und zur Seite hin durch Abschirmungen 62 abgeschirmt ist. Die Abschirmungen 62 können vorzugsweise als Kollimator wirken. Das Fenster 58 ist insbesondere aus Aluminium, um nur relativ hochenergetische Röntgenstrahlen von mehr als beispielsweise 60 keV durchzulassen.

Am Boden des Kanals 52 sind mehrere (in der dargestellten Ausführungsform vier) Photonendetektoren 64 seitlich nebeneinander über die Breite des Kanals 52 verteilt. Bei ihnen kann es sich um Geiger-Müller-Zählrohre oder an sich bekannte, geeignete Halbleiterdetektoren handeln. Die Photonendetektoren 64 sind getrennt voneinander mit einer Nachweisschaltung 66 verbunden, die ihrerseits wiederum mit einer Schnellstoppeinrichtung 68 verbunden ist. Die Schnellstoppeinrichtung 68 kann eine Sperrklinke betätigen, die zur mechanischen Arretierung des Antriebs der Förderwalzen 30 bis 36 dient, oder durch Ventile ein Unterbinden bzw. Umkehren der Flussrichtung des hydraulischen Flusses durch einen die Förderwalzen 30 bis 36 antreibenden Hydromotor bewerkstelligen.

Im Betrieb wird der Kanal 52 mit Erntegut durchströmt. Die von der Photonenquelle 60 in den Kanal 52 abgegebenen Photonen werden von den Photonendetektoren 64 nachgewiesen, wobei je nach Volumen, Dichte und Feuchtigkeit des Ernteguts eine geringfügige, aber in der Regel über die Breite des Kanals homogene und deshalb unproblematische Abschwächung erfolgen kann. Falls nun ein Fremdkörper im Kanal 52 enthalten ist, wird die Zählrate eines der Photonendetektoren 64 aufgrund der geringeren Intensität signifikant kleiner als die der anderen Photonendetektoren 64 sein. Die Zählrate des betroffenen Photonendetektors 64 wird somit (abhängig von der Größe des Fremdkörpers) um einen vorbestimmten, prozentualen Schwellenwert kleiner als die eines oder mehrerer benachbarter Photonendetektoren 64 sein und die Nachweisschaltung 66 spricht an und aktiviert die Schnellstoppeinrichtung 68.

Die Photonenquelle 60 wird nach außen durch die Wände 54, 56, die Abschirmung 62 und ggf. nach unten durch weitere, unterhalb der Photonendetektoren angeordnete Abschirmungen abgeschirmt, sodass der Bediener der Erntemaschine 10 keiner unnötigen Strahlenbelastung ausgesetzt ist. Eine geeignete Steuerung (nicht gezeigt) ermöglicht eine Inbetriebnahme der Photonenquelle 60 nur im Erntebetrieb und mit am Einzugsgehäuse 50 angebrachter Erntegutaufnahmevorrichtung 20.

In der Kabine 18 ist ein mit der Nachweisschaltung 66 verbundener Bordcomputer 90 mit einer Anzeigeeinrichtung angebracht, mit welcher dem Bediener ggf. angezeigt wird, an welcher Stelle der Breite des Kanals 52 ein Fremdkörper nachgewiesen wurde. Dadurch ist die Entnahme aus dem Erntegut nach einem Reversieren der Förderwalzen 30 bis 36 und der Emtegutaufnahmeeinrichtung 20 erleichtert.

Die Zählraten der Photonendetektoren 64 hängen, wie beschrieben, vom Volumen und der Dichte des Ernteguts im Kanal 52 ab. Sie können demnach addiert und zur Bestimmung des Massendurchsatzes herangezogen werden. Der auf diese Weise bestimmte Massendurchsatz kann in der Nachweisschaltung 66 oder dem damit verbundenen Bordcomputer 90 georeferenziert kartiert und/oder zur Bestimmung der Vortriebsgeschwindigkeit der Erntemaschine 10 verwendet werden.

Es sei noch angemerkt, dass verschiedene Modifikationen der Erfindung möglich sind. So können mehrere Photonenquellen 60 über die Breite des Kanals 52 verteilt werden, um eine homogene Beaufschlagung des Innenraums des Kanals 52 über die Breite des Kanals 52 zu erzielen. Außerdem kann die Anzahl der Photonendetektoren 64 größer oder kleiner sein als dargestellt. Insbesondere entspricht die Breite des Photonendetektors 64 näherungsweise den Abmessungen des kleinsten nachzuweisenden Fremdkörpers.

Um den Einfluss unterschiedlich empfindlicher Photonendetektoren 64 und/oder unterschiedlich intensiver Photonenquellen 60 zu minimieren, kann vor Beginn (und/oder während) eines Erntevorgangs eine selbsttätige Kalibrierung durchgeführt werden, bei der die Zählraten der Photonendetektoren 64 bei nicht mit Erntegut gefülltem Kanal 52 erfasst und als Normierungsgröße in der Nachweisschaltung 66 gespeichert werden. Die später erfassten Zählraten werden jeweils durch diese Normierüngsgröße dividiert.

## Patentansprüche

1. Emtemaschine (10) in der Form eines selbstfahrenden Feldhäckslers mit einer Einrichtung zum Nachweis eines eingedrungenen Fremdkörpers und einem von Erntegut durchströmbaren Kanal (52), der sich zwischen einer Erntegutaufnahmevorrichtung (20) und einer Häckseleinrichtung (22) befindet und mit unteren Förderwalzen (30, 32) und oberen Förderwalzen (34, 36) ausgestattet ist, wobei die Breite des Kanals (52) größer als dessen Höhe ist, **dadurch gekennzeichnet, dass** die Einrichtung zum Nachweis eines eingedrungenen Fremdkörpers eine am Kanal (52) stromauf der Förderwalzen (30-36) angeordnete Photonenquelle (60), einen der Photonenquelle (60) stromauf der Förderwalzen (30-36) gegenüber liegenden Photonendetektor (64), und eine mit dem Photonendetektor (64) verbundene Nachweisschaltung (66) umfasst, die mit einer Schnellstoppeinrichtung (68) verbunden ist, welche zum Anhalten der unteren Förderwalzen (30, 32) und oberen Förderwalzen (34, 36) der Erntemaschine (10) im Fall des Nachweises eines Fremdkörpers anhand der vom Photonendetektor (64) empfangenen Intensität eingerichtet ist und dass die Photonenquelle (60) eine Röntgenröhre und an der Ober- oder Unterseite des Förderkanals (52) angeordnet ist.

2. Erntemaschine nach Anspruch 1, **dadurch gekennzeichnet, dass** mehrere Photonendetektoren (64) über die Breite des Förderkanals (52) verteilt sind und dass die Nachweisschaltung (66) betreibbar ist, die von den einzelnen Photonendetektoren (64) empfangenen Intensitäten zu vergleichen.

3. Erntemaschine nach Anspruch 2, **dadurch gekennzeichnet, dass** die Nachweisschaltung (66) mit einer Anzeigeeinrichtung verbunden ist, mit welcher anzeigbar ist, an welcher Stelle der Breite des Kanals (52) ein Fremdkörper nachgewiesen wurde.

4. Erntemaschine nach einem der Ansprüche 2 oder 3, **dadurch gekennzeichnet, dass** der Massendurchsatz des Ernteguts anhand der Zählraten der Photonendetektoren (64) bestimmt und georeferenziert kartiert und/oder zur Bestimmung der Vortriebsgeschwindigkeit der Erntemaschine (10) verwendet wird.

5. Erntemaschine nach einem der Ansprüche 2 bis 4, **dadurch gekennzeichnet, dass** die Nachweisschaltung (66) betreibbar ist, eine selbsttätige Kalibrierung durchzuführen, bei der die Zählraten der Photonendetektoren (64) bei nicht mit Erntegut gefülltem Kanal (52) erfasst und als Normierungsgröße in der Nachweisschaltung (66) gespeichert werden.

## Claims

1. Harvester (10) in the form of a self-propelled field chopper comprising a device for detecting a foreign body which has entered and a channel (52) through which harvested crops can pass, which is located between a crop-receiving device (20) and a chopping device (22) and is equipped with lower feed rollers (30, 32) and upper feed rollers (34, 36), the width of the channel (52) being greater than its height, **characterized in that** the device for detecting a foreign body which has entered comprises a photon source (60), which is arranged on the channel (52) upstream of the feed rollers (30-36), a photon detector (64), which lies opposite the photon source (60) upstream of the feed rollers (30-36), and a detection circuit (66), which is connected to the photon detector (64) and to a quick-stopping device (68), which is designed to stop the lower feed rollers (30, 32) and upper feed rollers (34, 36) of the harvester (10) in the event of the detection of a foreign body on the basis of the intensity received by the photon detector (64), and **in that** the photon source (60) is an x-ray tube and is arranged on the upper side or underside of the feed channel (52).

2. Harvester according to Claim 1, **characterized in that** a number of photon detectors (64) are distributed over the width of the feed channel (52) and **in that** the detection circuit (66) can be operated to compare the intensities received by the individual photon detectors (64).

3. Harvester according to Claim 2, **characterized in that** the detection circuit (66) is connected to an indicating device, with which it can be indicated at which point over the width of the channel (52) a foreign body has been detected.

4. Harvester according to either of Claims 2 and 3, **characterized in that** the mass throughput of the harvested crop is determined on the basis of the counting rates of the photon detectors (64) and mapped on a georeferenced basis and/or is used for determining the advancing rate of the harvester (10).

5. Harvester according to one of Claims 2 to 4, **characterized in that** the detection circuit (66) can be operated to carry out an automatic calibration, in which the counting rates of the photon detectors (64) when the channel (52) is not filled with harvested crops are recorded and stored as a normalizing factor in the detection circuit (66).

## Revendications

1. Moissonneuse (10) présentant la forme d'une hacheuse autotractée dotée d'un dispositif de détection de la pénétration d'un corps étranger et d'un canal (52) apte à être traversé par le produit récolté, situé entre un ensemble (20) de reprise du produit récolté et un dispositif de hachage (22) et équipé de cylindres inférieurs de transport (30, 32) et de cylindres supérieurs de transport (34, 36), la largeur du canal (52) étant supérieure à sa hauteur,
**caractérisée en ce que**
le dispositif de détection de la pénétration d'un corps étranger comporte une source (60) de photons disposée sur le canal (52) en amont des cylindres de transport (30-36), un photodétecteur (64) situé face à la source (60) de photons en amont des cylindres de transport (30-36) et un circuit de détection (66) raccordé au détecteur (64) de photons et raccordé à un dispositif (68) d'arrêt rapide qui est conçu pour arrêter les cylindres inférieurs de transport (30, 32) et les cylindres supérieurs de transport (34, 36) de la moissonneuse (10) en cas de détection de la présence d'un corps étranger, à l'aide de l'intensité reçue par le détecteur (64) de photons et
**en ce que** la source (60) de photons est un tube à rayons X et est disposée sur le côté supérieur ou le côté inférieur du canal de transport (52).

2. Moissonneuse selon la revendication 1, **caractérisée en ce que** plusieurs détecteurs (64) de photons sont répartis sur la largeur du canal de transport (52) et **en ce que** le circuit de détection (66) peut être utilisé pour comparer les intensités reçues par les différents détecteurs (64) de photons.

3. Moissonneuse selon la revendication 2, **caractérisée en ce que** le circuit de détection (66) est raccordé à un dispositif d'affichage qui permet d'afficher à quel endroit de la largeur du canal (52) un corps étranger a été détecté.

4. Moissonneuse selon l'une des revendications 2 ou 3, **caractérisée en ce que** le débit massique de produit récolté est déterminé à l'aide des taux de comptage des détecteurs (64) de photons et est cartographié de manière géoréférencée et/ou est utilisé pour déterminer la vitesse d'avancement de la moissonneuse (10).

5. Moissonneuse selon l'une des revendications 2 à 4, **caractérisée en ce que** le circuit de détection (66) peut être utilisé pour réaliser un étalonnage automatique dans lequel les taux de comptage des détecteurs (64) de photons sont saisis lorsque le canal (52) n'est pas rempli de produit récolté et sont conservés en mémoire dans le circuit de détection (66) comme grandeurs de normalisation.
